# EUROPEAN PATENT SPECIFICATION

(11) **EP 4 142 097 B1**
(45) Date of publication and mention of the grant of the patent: **16.09.2026**
(21) Application number: 21793501.4
(22) Date of filing: 12.04.2021
(51) Int. Cl.: H02J 7/00, H02J 7/50, H02J 7/64, H02J 7/80, H02J 7/96, H02J 9/06, H01M 10/44, H01M 10/48

(54) **UNINTERRUPTIBLE POWER SUPPLY DEVICE**
UNTERBRECHUNGSFREIE STROMVERSORGUNGSVORRICHTUNG
DISPOSITIF D'ALIMENTATION ÉLECTRIQUE SANS INTERRUPTION

(30) Priority: 22.04.2020 JP 2020075861
(43) Date of publication of application: 01.03.2023
(73) Proprietor: FDK Corporation, Tokyo 108-8212 (JP)
(72) Inventor: KONDA, Naoaki, Tokyo 108-8212 (JP)
(74) Representative: Epping - Hermann - Fischer
(86) International application number: PCT/JP2021/015117
(87) International publication number: WO 2021/215282

(56) References cited:
- JP-A- 2016 010 250
- JP-A- 2017 011 849
- JP-A- 2020 031 470
- US-A1- 2017 063 150

## Description

### Technical Field

The present invention relates to an uninterruptible power supply device (UPS).

### Background Art

An uninterruptible power supply device is a power supply that supplies electric power from a pre-charged secondary battery to a load device in order to continue an operation of the load device when power supplied from an external power source to the load device is stopped due to a power failure or the like. Generally, a battery unit of the uninterruptible power supply device is charged with electric power from the external power source during a normal operation. The secondary battery used in the battery unit is an alkaline secondary battery such as a nickel hydrogen secondary battery.

Document US 2017/063150 A1 discloses an uninterruptible power supply unit that is configured such that, during charging of a first battery pack, and until, after the first battery pack is charged to a fully charged state, the voltage of the first battery pack is lowered below an upper limit voltage of a load device, discharging of the first battery pack is prohibited, and discharging of the second battery pack is allowed.

The nickel hydrogen battery needs to be charged at a voltage higher than the rated voltage in order to be fully charged. However, the charging voltage of the battery unit depends on the voltage of the external power source, and the voltage of the external power source is approximately the rated voltage. Therefore, it is not possible to fully charge the nickel hydrogen battery.

Thus, a DC/DC converter is provided inside the battery unit, and then the input voltage from the external power source is boosted to a voltage at which the nickel hydrogen battery is fully charged.

Further, in order for the battery to discharge efficiently, a plurality of battery packs are connected in parallel, and the battery packs are individually charged and then discharged. In this case, the input voltage from the external power source is boosted by the DC/DC converter inside the battery unit to charge each battery pack. Since the battery voltage of the battery pack immediately after being fully charged exceeds the upper limit voltage, which exceeds a dischargeable voltage to the load device, the battery pack cannot be immediately discharged to the load device. Therefore, by shifting the timing of charging the battery pack and setting the battery voltage of at least one battery pack to be equal to or less than the dischargeable upper limit voltage, the batter pack is able to be continuously discharged.

### Prior Art Document

### Patent Document

Patent Document 1: Japanese Patent Laid-Open Publication No. 2016-10250

### Summary of the Invention

### Problems to be solved by the Invention

When the uninterruptible power supply device is provided with two battery packs connected in parallel and while the battery voltage of one battery pack exceeds the dischargeable upper limit voltage, for example, only the other battery pack can be caused to discharge to the load device. At this time, when the load device requires a large amount of electric power, electric power from the other battery pack may not be sufficient. Therefore, it is desired that the period in which the battery voltage of one battery pack exceeds the upper limit voltage is as short as possible.

The present invention has been made in view of the above problems, and an object thereof is to provide an uninterruptible power supply device having a shorter period of time period which is necessary for a battery pack to be able to discharge to a load device after being fully charged.

### Means for Solving the Problems

### <First Aspect of the Present Invention>

A first aspect of the present invention is an uninterruptible power supply device according to claim 1. The uninterruptible power supply device used for a load device to which electric power is supplied from an external power source, comprising: a battery pack including a secondary battery cell; a charge circuit configured to charge the battery pack; a main discharge circuit configured to discharge the battery pack to the load device; a regulating discharge circuit including a resistive component; and a control unit configured to control the charge circuit, the main discharge circuit, and the regulating discharge circuit. At a first moment when the battery pack is charged to a dischargeable upper limit voltage, the control unit shifts the battery pack to a discharge inhibition condition where the battery pack is charged to a full capacity and not able to discharge to the load device. When the discharge inhibition condition is over, the control unit enables the battery pack to discharge to the load device. The discharge inhibition condition starts at the first moment as a starting time point. The control unit continues charging the battery pack after the starting time point, the control unit ceases the charging the battery pack to electrically connect the battery pack to the regulating discharge circuit when the battery pack reaches a full charge. At a second moment when an electrical connection between the battery pack and the regulating discharge circuit lowers the battery voltage to or below the upper limit voltage, the control unit disconnects the battery pack from the regulating discharge circuit, and the discharge inhibition condition is over at the second moment.

In order to use the battery pack in an effective manner, it is necessary to fully charge the secondary battery cell that constitutes the battery pack. When the secondary battery cell is, for example, an alkaline secondary battery, in order to fully charge the secondary battery, charging needs to be performed until the battery voltage becomes a voltage higher than the rated voltage, that is, the dischargeable upper limit voltage. Therefore, when the battery pack is charged, the battery pack is shifted to the discharge inhibition condition and is inhibited from discharging to the load device in order to prevent the load device from being applied an overvoltage across being applied to until the battery voltage first exceeds the upper limit voltage, reaches the fully charged state, and then drops to the upper limit voltage again.

In the discharge inhibition condition, the moment at which the battery voltage has reached the upper limit voltage is used as the starting moment. At and after the starting moment, the battery pack is continuously charged. When the battery pack is fully charged, the battery pack is stopped to be charged and the regulating discharge circuit is connected to the battery pack. As a result of this connection, the battery pack discharges to a resistive component of the regulating discharge circuit. Therefore, the battery voltage decreases rapidly. At a moment at which the battery voltage decreases below the upper limit voltage, the battery pack is disconnected from the regulating discharge circuit. The moment at which the battery voltage drops to or below the upper limit voltage is used as the ending moment of the discharge inhibition condition.

After the end of the discharge inhibition condition, the battery pack is able to discharge to the load device. Therefore, in the event of a power failure, it is possible to supply electric power from the battery pack to the load device.

In this manner, in the discharge inhibition condition, with respect to the battery capacity corresponding to the voltage exceeding the upper limit voltage of the battery pack, the battery voltage of the battery pack is lowered by forcibly discharging the battery pack to the resistive component of the regulating discharge circuit. Therefore, it is possible to shorten the discharge inhibition condition period, as compared with the uninterruptible power supply device having no regulating discharge circuit. As a result, it is possible to extend a period in which the battery pack can discharge to the load device.

The regulating discharge circuit includes a resistor. The battery pack forms a closed circuit including the resistor, when the battery pack is electrically connected to the regulating discharge circuit. By the above configuration, with respect to the battery capacity corresponding to the voltage exceeding the upper limit voltage of the battery pack, it is possible to reduce the battery voltage of the battery pack to the upper limit voltage in a short period of time by causing the battery pack to discharge to a resistor element.

### <Second Aspect of the Present Invention>

According to a second aspect of the present invention, in the first aspect, the battery pack comprises a plurality of battery packs including a first battery pack and a second battery pack, the plurality of battery packs being connected in parallel to each other. The charge circuit is configured to charge the plurality of battery packs individually. The main discharge circuit is configured to discharge the plurality of battery packs individually. At a third moment when the first battery pack is charged to the dischargeable upper limit voltage and a battery voltage of a second battery pack is equal to or less than the upper limit voltage, the control unit shifts the first battery pack to the discharge inhibition condition starting from the third moment. The control unit enables the second battery pack to discharge to the load device without charging the second battery pack in a period in which the first battery pack is in the discharge inhibition condition.

In the above configuration, when the first battery pack is in the discharge inhibition condition and cannot discharge to the load device because the battery voltage thereof is higher than the upper limit voltage, the second battery pack is able to discharge to the load device without charging the second battery pack whose battery voltage at the starting moment of the period is equal to or less than the upper limit voltage. Therefore, in the event of a power failure, it is possible to supply electric power from the second battery pack to the load device.

### <Third Aspect of the Present Invention>

According to a third aspect of the present invention, in the second aspect, the control unit starts charging the second battery pack without charging the first battery pack after the discharge inhibition condition of the first battery pack is over. At a forth moment when at which the second battery pack is charged to the dischargeable upper limit voltage, the control unit shifts the second battery pack to another discharge inhibition condition starting from the forth moment. After the discharge inhibition condition of the secondary battery pack is over, the control unit enables the first battery pack and the second battery pack to discharge to the load device without charging the first and second battery packs.

After the discharge inhibition condition of the first battery pack is ended, the second battery pack is started to be charged without charging the first battery pack, and at the fourth moment at which the battery voltage of the second battery pack has reached the upper limit voltage, the second battery pack is shifted to the discharge inhibition condition in which the fourth moment is used as the starting moment. While the second battery pack is in the discharge inhibition condition, the first battery pack is enabled to be caused to discharge to the load device. Therefore, in the event of a power failure, it is possible to discharge the first battery pack to the load device. Further, after the end of the discharge inhibition condition of the second battery pack, it is possible to discharge both the first and second battery packs to the load device. In addition, since the two battery packs can discharge at the same time, the amount of electric power supplied to the load device can be increased as compared with the discharge of a single battery pack.

Further, since the discharge inhibition conditions of the first and second battery packs do not overlap with each other, even when the battery voltage of one of the battery packs exceeds the upper limit voltage due to charging and that battery pack is not able to discharge, it is possible to discharge the other battery pack to the load device. Therefore, as the device as a whole, it is possible to supply power to the load device when electric power from the external power source is cut off.

### <Fourth Aspect of the Present Invention>

According to a fourth aspect of the present invention, in the second or third aspect, the control unit starts charging one of the plurality of battery packs when a battery voltage of the one of the plurality of battery packs is equal to or less than a charge starting voltage, the charge starting voltage being less than the dischargeable upper limit voltage.

### <Fifth Aspect of the Present Invention>

According to a fifth aspect of the present invention, in the first or second aspect, the secondary battery cell is a nickel hydrogen battery. The nickel hydrogen battery needs to be charged to a battery voltage higher than the rated voltage in order to be fully charged state, but prevents the load device from being applied a voltage higher than the upper limit voltage.

### Advantageous Effects of the Invention

According to the present invention, it is possible to shorten the discharge inhibition condition of one battery pack, which starts from the starting moment in which the battery pack during charging exceeds the dischargeable upper limit voltage, and finishes at the ending moment at which the battery voltage is decreased below the upper limit voltage after the battery pack is fully charged.

### Brief Description of the Drawings

FIG. 1 is a block diagram showing a system including an uninterruptible power supply device according to an embodiment,
FIG. 2 is a circuit diagram of the uninterruptible power supply device shown in Fig. 1, and
FIG. 3 shows a time chart of battery voltages of the first and second battery packs and operations of the switches shown in Fig. 2.

### Mode for Carrying out the Invention

Hereinafter, an embodiment(s) of the present disclosure will be described with reference to the drawings. It will be appreciated that the present invention is not limited to the embodiment(s) described below, and various modifications can be made within the scope of the inventions described in the claims.

### <Configuration of Uninterruptible Power Supply Device 1>

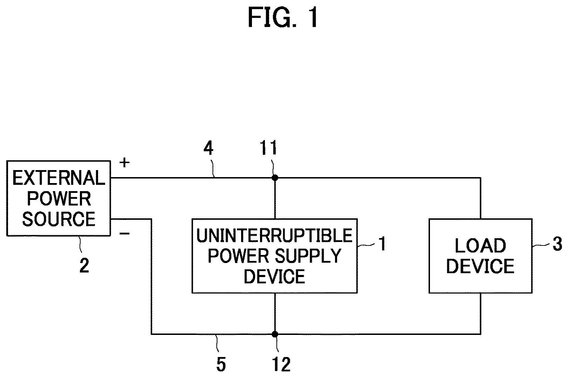

An uninterruptible power supply device 1 according to one embodiment will be described with reference to the drawings. As shown in Fig. 1, the uninterruptible power supply device 1 is connected in parallel with an external power source 2 and configured to supply electric power to a load device 3 instead of the external power source 2 when power supplied from the external power source 2 to the load device 3 is cut off due to a power failure or the like. The external power source 2 is a power supply configured to supply a DC power with a voltage of V₀ from the commercial power as an input source. The load device 3 is an electrical device configured to operate with the DC power having the voltage V₀.

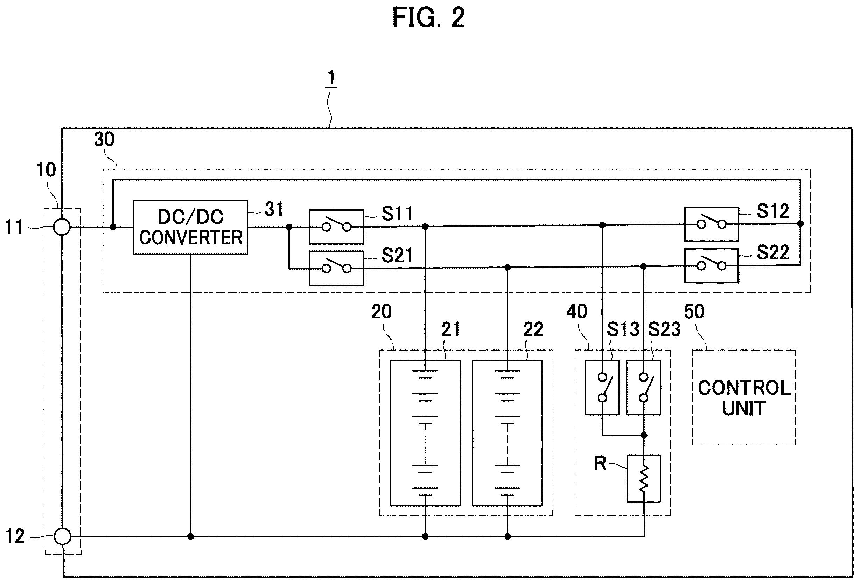

As shown in Fig. 2, the uninterruptible power supply device 1 includes an input and output unit 10, a battery unit 20, a charge and discharge circuit 30, a regulating discharge circuit 40, and a control unit 50. The input and output unit 10 includes a pair of terminals 11 and 12. The terminal 11 is connected to a power supply line 4 on the higher potential side that supplies electric power from the external power source 2 to the load device 3, and the terminal 12 is connected to a power supply line 5 on the lower potential side.

The battery unit 20 includes a first battery pack 21 and a second battery pack 22. Each of the first battery pack 21 and the second battery pack 22 has a positive electrode connected to the charge and discharge circuit 30 and a negative electrode connected to the terminal 12. In other words, the first battery pack 21 and the second battery pack 22 are connected in parallel to each other. Each of the battery packs 21 and 22 includes the same number of nickel hydrogen secondary battery cells connected in series. Each of the first battery pack 21 and the second battery pack 22 has the rated voltage value that is the same as the voltage V₀ of the external power source 2, and has the full capacity of 20 Ah. Note that the nickel hydrogen secondary battery cell is one example of the secondary battery cell.

The charge and discharge circuit 30 is configured to charge the battery unit 20 with the electric power from the external power source 2 and discharge the battery unit 20 to the load device 3 via the input and output unit 10 in the event of a power failure of the external power source 2. The charge and discharge circuit 30 includes a DC/DC converter 31, a first charging switch S11, a first discharging switch S12, a second charging switch S21, and a second discharging switch S22. The charge and discharge circuit 30 forms a charge circuit and a main discharge circuit.

The DC/DC converter 31 is configured to boost the voltage V₀ of the external power source 2 to a charging voltage for the battery packs 21 and 22 to apply the boosted voltage across the battery packs 21 and 22. More specifically, the DC/DC converter 31 is an input/output isolation type of a step-up DC/DC converter.

The first charging switch S11 is configured to turn ON/OFF the charging the first battery pack 21. One end of the first charging switch S11 is connected to the output portion of the DC/DC converter 31, and the other end thereof is connected to the positive electrode of the first battery pack 21. When the first charging switch S11 is turned on, the first battery pack 21 is charged with an output voltage from the DC/DC converter 31.

The second charging switch S21 is configured to turn ON/OFF the charging the second battery pack 22. One end of the second charging switch S21 is connected to the output portion of the DC/DC converter 31, and the other end thereof is connected to the positive electrode of the second battery pack 22. When the second charging switch S21 is turned on, the second battery pack 22 is charged with an output voltage of the DC/DC converter 31.

The first discharging switch S12 is configured to turn ON/OFF the discharging the first battery pack 21 to the load device 3. One end of the first discharging switch S12 is connected to the terminal 11, and the other end thereof is connected to the positive electrode of the first battery pack 21. When the first discharging switch S12 is turned on, the first battery pack 21 is brought into a condition of being dischargeable to the load device 3.

The second discharging switch S22 is configured to turn ON/OFF the discharging from the second battery pack 22 to the load device 3. One end of the second discharging switch S22 is connected to the terminal 11, and the other end thereof is connected to the positive electrode of the second battery pack 22. When the second discharging switch S22 is turned on, the second battery pack 22 is brought into the condition of being dischargeable to the load device 3.

The regulating discharge circuit 40 includes a resistor R having a resistive component, a first auxiliary switch S13, and a second auxiliary switch S23. One end of the resistor R is connected to the positive electrode of the first battery pack 21 through the first auxiliary switch S13, and is connected to the positive electrode of the second battery pack 22 through the second auxiliary switch S23. The other end of the resistor R is connected to the negative electrode of the first battery pack 21 and the negative electrode of the second battery pack 22. Therefore, when the first auxiliary switch S13 is turned on, the resistor R and the first battery pack 21 form a closed circuit which enables the first battery pack 21 to discharge to the resistor R. On the other hand, when the second auxiliary switch S23 is turned on, the resistor R and the second battery pack 22 form a closed circuit which enables the second battery pack 22 to discharge to the resistor R.

Further, the resistance value of the resistor R is determined depending on the time period required to reduce the battery voltage of the fully charged battery pack to the upper limit voltage, which will be described later. Note that the resistor R is one example of the resistive component.

The control unit 50 includes a voltage detecting means (not shown) that detects the battery voltage of the first battery pack 21 and the battery voltage of the second battery pack 22. The control unit 50 controls the charge and discharge circuit 30 and the regulating discharge circuit 40 on the basis of the detected battery voltages of the first and second battery packs 21 and 22, respectively. Specifically, the control unit 50 controls ON/OFF of the first charging switch S11, the first discharging switch S12, the first auxiliary switch S13, the second charging switch S21, the second discharging switch S22, and the second auxiliary switch S23 on the basis of the battery voltage of the first battery pack 21 and the battery voltage of the second battery pack 22. Therefore, by switching ON/OFF of these switches, the control unit 50 individually charges the first battery pack 21 and the second battery pack 22 and/or individually discharge the first battery pack 21 and the second battery pack 22 to the load device 3.

More specifically, the control unit 50 starts charging when each of the battery voltages of the first and second battery packs 21 and 22 is equal to or lower than a charging start voltage. In this embodiment, the charging start voltage corresponds to 90% of the full capacity of the battery pack. However, in another embodiment, the charging start voltage may correspond to an appropriate ratio of the battery capacity corresponding to a full capacity, depending on the type and size of the secondary battery cell. Note that the control unit 50 is one example of a control unit.

### <Charge and Discharge Control by Uninterruptible Power Supply Device 1>

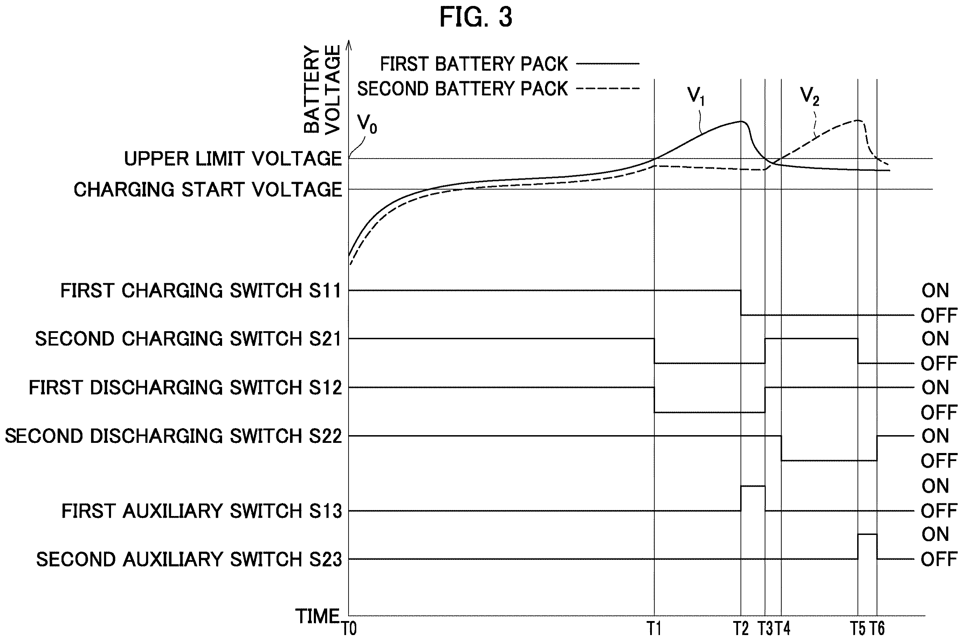

Charge and discharge control of the control unit 50 for the first battery pack 21 and the second battery pack 22 will be described with reference to Fig. 3.

Fig. 3 shows changes in the battery voltage V₁ of the first battery pack 21 and the battery voltage V₂ of the second battery pack 22, and ON/OFF of the switches S11, S12, S13, S21, S22, and S23.

In this embodiment, the voltage V₀ of the external power source 2 and the rated voltage of the first and second battery packs 21 and 22 are both set to 54 V. The rated voltage of the first and second battery packs 21 and 22 is also identical to the dischargeable upper limit voltage. The load device 3 is configured to operate at an input voltage of 40 V to 56 V. Therefore, the dischargeable upper limit voltage is set to 54 V, which is the same as the voltage V₀ of the external power source 2. And the lower limit voltage is set to 40 V. Further, the output voltage of the DC/DC converter 31 is set to 60 V.

At time T0, if the battery voltage V₁ of the first battery pack 21 and the battery voltage V₂ of the second battery pack 22 are both lower than the charging start voltage, the control unit 50 turns on the first and second charging switches S11 and S21 to start charging to the first battery pack 21 and the second battery pack 22. Further, the control unit 50 turns on the first and second discharging switches S12 and S22 to transfer the first battery pack 21 and the second battery pack 22 into the dischargeable condition to the load device 3 in preparation for a power failure. At this time, the control unit 50 turns off the first and second auxiliary switches S13 and S23. Then, until either one of the battery voltage V₁ of the first battery pack 21 and the battery voltage V₂ of the second battery pack 22 increases to the upper limit voltage V₀ of the load device 3, the first battery pack 21 and the second battery pack 22 are charged.

At time T1, when the battery voltage V₁ of the first battery pack 21 reaches the upper limit voltage V₀ prior to the battery voltage V₂ of the second battery pack 22, the first battery pack 21 is transferred to the discharge inhibition condition starting at the time T1 as the starting time point. In the discharge inhibition condition, the control unit 50 continues charging the first battery pack 21 after the time T1 in order to fully charge the first battery pack 21. Due to the continuous charging to the first battery pack 21, the battery voltage V₁ of the first battery pack 21 becomes higher than the upper limit voltage V₀. When the battery voltage V₁ that is higher than the upper limit voltage V₀ is applied to the load device 3, an overvoltage might be caused that damages the load device 3. Therefore, the first discharging switch S12 is switched from ON to OFF at the time T1 so as to inhibit the first battery pack 21 from discharging to the load device 3.

When the first battery pack 21 is fully charged at time T2, the control unit 50 switches the first charging switch S11 from ON to OFF to stop the charging to the first battery pack 21. Since the battery voltage V₁ when the first battery pack 21 is fully charged is higher than the rated voltage V₀ or the upper limit voltage, the control unit 50 does not allow the first battery pack 21 to discharge to the load device 3. Therefore, at the time T2, the first auxiliary switch S13 is switched from OFF to ON to form a first closed circuit including the first battery pack 21 and the resistor R. In the first closed circuit, since the first battery pack 21 discharges to the resistor R, the battery voltage V₁ of the first battery pack 21 lowers. Further, at and after the time T2, the first discharging switch S12 is maintained being OFF, and the control unit 50 continuously inhibited the first battery pack 21 from discharging to the load device 3.

At time T3, when the control unit 50 detects that the battery voltage V₁ of the first battery pack 21 becomes equal to or less than the upper limit voltage V₀, the control unit 50 switches the first auxiliary switch S13 from ON to OFF to stop discharging the first battery pack 21 to the resistor R. The time T3 is the ending time of the discharge inhibition condition of the first battery pack 21. At this time, the first discharging switch S12 is switched from OFF to ON to be able to discharge the first battery pack 21 to the load device 3. Further, the control unit 50 maintains the first charging switch S11 OFF not to charge the battery pack 21. Therefore, the load device 3 can receive the battery capacity of 20 Ah from the first battery pack 21 after the time T3.

With respect to the second battery pack 22, the second charging switch S21 is switched from ON to OFF at the time T1 to stop the charging to the second battery pack 22. Since the second battery pack 22 is not charged after the time T1, the battery voltage V₂ of the battery pack 22 is less than the upper limit voltage V₀. Therefore, the control unit 50 maintains the second discharging switch S22 ON, and enables the second battery pack 22 to discharge to the load device 3.

As described above, the control unit 50 prevents the first battery pack 21 from discharging to the load device 3 and further enables the second battery pack 22 to discharge to the load device 3 during the discharge inhibition condition (during the time period from T1 to T3). In the discharge inhibition condition, the battery voltage V₁ of the first battery pack 21 exceeds the upper limit voltage V₀, reaches the fully charged voltage, and then reduces to the upper limit voltage V₀. Therefore, when electric power supplied from the external power source 2 to the load device 3 is stopped in the discharge inhibition condition of the first battery pack 21, it is possible to supply electric power from the second battery pack 22, which constitutes the battery unit 20, to the load device 3.

Next, at the time T3, the control unit 50 turns the second charging switch S21 from OFF to ON to start charging the second battery pack 22. After starting charging the second battery pack 22, the battery voltage V₂ of the second battery pack 22 is increased and reaches the upper limit voltage V₀ at time T4. The control unit 50 shifts the second battery pack 22 to the discharge inhibition condition starting at the time T4. The "discharge inhibition condition" is a condition where when the control unit 50 prevents the battery pack from discharging to the load device, because the battery voltage of the battery pack is higher than the upper limit voltage. In this discharge inhibition condition, since the control unit 50 charges the second battery pack 22 in order to be fully charged and then the battery voltage V₂ becomes higher than the upper limit voltage V₀, the control unit 50 switches the second discharging switch S22 from ON to OFF to prevent the second battery pack 22 from discharging to the load device 3. Note that the switching the second charging switch S21 from OFF to ON may be performed not only at the time T3 when the battery voltage V₁ of the first battery pack 21 becomes the upper limit voltage V₀, but also at the timing when the battery voltage V₁ of the first battery pack 21 decreases less than the upper limit voltage V₀.

Next, at time T5, when the second battery pack 22 is charged to full capacity, the control unit 50 switches the second charging switch S21 from ON to OFF to stop the charging the second battery pack 22. When the second battery pack 22 is in the fully charged, the battery voltage V₂ of the second battery pack 22 is higher than the rated voltage V₀ or the upper limit voltage, the control unit 50 does not allow the second battery pack 22 to discharge to the load device 3. Therefore, the control unit 50 switches the second auxiliary switch S23 from OFF to ON to form a second closed circuit including the second battery pack 22 and the resistor R. In the second closed circuit, since the second battery pack 22 discharges to the resistor R, the battery voltage V₂ of the second battery pack 22 is decreased. After the time T5, the control unit 50 maintains the second discharging switch S22 OFF to prevent the second battery pack 22 from discharging to the load device 3.

At time T6 when the control unit 50 detects that the battery voltage V₂ of the second battery pack 22 is decreased to or below the upper limit voltage V₀, the control unit 50 switches the second auxiliary switch S23 from ON to OFF to stop discharging the second battery pack 22 to the resistor R. At the timing T6, the discharge inhibition condition of the second battery pack 22 is finished. The control unit 50 switches the second discharging switch S22 from OFF to ON to allow the second battery pack 22 to discharge to the load device 3. Note that the switching the second discharging switch S22 from OFF to ON can be performed not only at the time T6 at which the battery voltage V₂ of the second battery pack 22 becomes the upper limit voltage V₀, but also at the timing at which the battery voltage V₂ of the second battery pack 22 becomes less than the upper limit voltage V₀.

While the second battery pack 22 is in the discharge inhibition condition (the times T4 to T6), the control unit 50 does not allow the first battery pack 21 to be charged because the first charging switch S11 is maintained OFF. Therefore, the battery voltage V₁ of the first battery pack 21 is lower than the upper limit voltage V₀. Thus, by maintaining the first discharging switch S12 ON, the control unit 50 allows the first battery pack 21 to discharge to the load device 3. The load device 3 can receive the battery capacity 20 Ah from the first battery pack 21 during the times T4 to T6.

After the time T6, the first and second charging switches S11 and S21 are both maintained OFF so that the control unit 50 does not charge both of the first battery pack 21 and the second battery pack 22. As a result, the battery voltage V₁ of the first battery pack 21 and the battery voltage V₂ of the second battery pack 22 are both equal to or less than the upper limit voltage V₀, which are ready for discharging to the load device 3. Therefore, by maintaining the first and second discharging switches S12 and S22 ON, it is possible to supply electric power from the battery unit 20 to the load device 3 when power supply from the external power source 2 to the load device 3 is stopped. Thus, after the time T6, the load device 3 can receive a battery capacity of 40 Ah, which is the sum of the battery capacity 20 Ah of the first battery pack 21 and the battery capacity 20 Ah of the second battery pack 22.

Then, when one or both of the battery voltages V₁ and V₂ of the first battery pack 21 and the second battery pack 22 is decreased below the charging start voltage, the control unit 50 starts charging the battery pack whose battery voltage is equal to or less than the charging start voltage.

In this manner, in the uninterruptible power supply device 1, when the battery voltage of either one of the first battery pack 21 and the second battery pack 22 is more than the upper limit voltage V₀, the other battery pack is maintained in the dischargeable state to the load device 3. As a result, in the event of a power failure, the uninterruptible power supply device 1 can supply electric power to the load device 3 from at least one of the first battery pack 21 and the second battery pack 22. Further, when electric power is supplied from the battery unit 20 to the load device 3, the output voltage of the battery unit 20 (the battery voltage V₁ of the first battery pack 21 or the battery voltages V₂ of the second battery pack 22) is constantly equal to or less than the upper limit voltage V₀ of the load device 3. Therefore, it is possible to prevent the load device 3 from being applied overvoltage.

Further, in the discharge inhibition condition, by forcibly discharging the battery packs 21 and 22 to the resistor R immediately after being fully charged, the battery voltages V₁ and V 2 of the battery packs 21 and 22 are reduced to the upper limit voltage V₀ in a shorter period of time, as compared to the case of natural discharge. Therefore, the time period of the discharge inhibition condition is shortened. In this manner, by shortening the discharge inhibition condition of one battery pack, it is possible to shift in a short time from the condition where the uninterruptible power supply device 1 is connected to the power source line, up to the condition where the load device 3 can receive the capacity of 40 Ah that is the sum of the battery capacities of the two battery packs.

In this manner, it is possible to provide the uninterruptible power supply device 1 in which effective use period of the battery capacity according to the number of battery packs is longer. Note that the effective use of the battery capacity means supplying the load device with the battery capacity according to the number of battery packs.

In the embodiment described above, the battery pack is discharged to the resistor in order to reduce the battery voltage of the battery pack in the fully charged to the upper limit voltage at which the battery pack can discharge to the load device 3. However, an appropriate electric element having a resistive component can be used.

Further, the number of battery packs connected in parallel to each other in the battery unit 20 is not limited to two, and an appropriate plurality of battery packs may be used. In this case, if the battery voltage of at least one of the plurality of battery packs connected in parallel to each other is equal to or less than the upper limit voltage, it is possible to start charging a battery pack from among the remaining battery packs, which has the battery voltage lower than the charging start voltage. In this case, the control unit 50 allows a battery pack having the battery voltage lower than the upper limit voltage to discharge to the load device 3.

Further, as the battery pack, in lieu of the above-mentioned nickel hydrogen secondary battery, an appropriate type of secondary battery cell, in which the battery voltage when fully charged becomes higher than the rated voltage, can be used.

### Explanation of Reference Signs

- 1: Uninterruptible power supply device
- 2: External power source
- 3: Load device
- 21, 22: Battery packs
- 30: Charge and discharge circuit
- 40: Regulating discharge circuit
- 50: Control unit
- R: Register

## Claims

1. An uninterruptible power supply device (1) used for a load device (3) to which electric power is supplied from an external power source (2), comprising:
a battery pack (21, 22) including a secondary battery cell;
a charge circuit (30) configured to charge the battery pack (21, 22);
a main discharge circuit (30) configured to discharge the battery pack (21, 22) to the load device (3);
a regulating discharge circuit (40) including a resistive component; and
a control unit (50) configured to control the charge circuit, the main discharge circuit, and the regulating discharge circuit (40), wherein
at a first moment when the battery pack (21, 22) is charged to a dischargeable upper limit voltage, the control unit (50) shifts the battery pack (21, 22) to a discharge inhibition condition where the battery pack (21, 22) is charged to a full capacity and not able to discharge to the load device (3), wherein
when the discharge inhibition condition is over, the control unit (50) enables the battery pack (21, 22) to discharge to the load device (3), wherein
the discharge inhibition condition starts at the first moment as a starting time point, wherein
the control unit (50) continues charging the battery pack (21, 22) after the starting time point, the control unit (50) ceases the charging the battery pack (21, 22) to electrically connect the battery pack (21, 22) to the regulating discharge circuit (40) when the battery pack (21, 22) reaches a full charge, and wherein
at a second moment when an electrical connection between the battery pack (21, 22) and the regulating discharge circuit (40) lowers the battery voltage to or below the upper limit voltage, the control unit (50) disconnects the battery pack (21, 22) from the regulating discharge circuit (40), and the discharge inhibition condition is over at the second moment, wherein the regulating discharge circuit (40) includes a resistor, and the battery pack (21, 22) forms a closed circuit together with the resistor, when the battery pack (21, 22) is electrically connected to the regulating discharge circuit (40).

2. The uninterruptible power supply device (1) according to claim 1, wherein
the battery pack comprises a plurality of battery packs including a first battery pack (21) and a second battery pack (22), the plurality of battery packs (21, 22) being connected in parallel to each other, wherein
the charge circuit is configured to charge the plurality of battery packs (21, 22) individually, wherein
the main discharge circuit is configured to discharge the plurality of battery packs (21, 22) individually, wherein
at a third moment when the first battery pack (21) is charged to the dischargeable upper limit voltage and a battery voltage of a second battery pack (22) is equal to or less than the upper limit voltage, the control unit (50) shifts the first battery pack (21) to the discharge inhibition condition starting from the third moment, and wherein
the control unit (50) enables the second battery pack (22) to discharge to the load device (3) without charging the second battery pack (22) in a period in which the first battery pack (21) is in the discharge inhibition condition.

3. The uninterruptible power supply device (1) according to claim 2, wherein:
the control unit (50) starts charging the second battery pack (22) without charging the first battery pack (21) after the discharge inhibition condition of the first battery pack (21) is over, wherein
at a forth moment when at which the second battery pack (22) is charged to the dischargeable upper limit voltage, the control unit (50) shifts the second battery pack (22) to another discharge inhibition condition starting from the forth moment, and wherein
after the discharge inhibition condition of the secondary battery pack (22) is over, the control unit (50) enables the first battery pack (21) and the second battery pack (22) to discharge to the load device (3) without charging the first and second battery packs (21, 22).

4. The uninterruptible power supply device (1) according to claim 2 or 3, wherein the control unit (50) starts charging one of the plurality of battery packs (21, 22) when a battery voltage of the one of the plurality of battery packs (21, 22) is equal to or less than a charge starting voltage, the charge starting voltage being less than the dischargeable upper limit voltage.

5. The uninterruptible power supply device (1) according to claim 1, wherein the secondary battery cell is a nickel hydrogen battery.

## Patentansprüche

1. Unterbrechungsfreie Stromversorgungseinrichtung (1) zur Verwendung für eine Lastvorrichtung (3), die von einer externen Stromquelle (2) mit elektrischer Energie versorgt wird, umfassend:
ein Batteriesatz (21, 22), das eine Sekundärbatteriezelle enthält;
eine Ladeschaltung (30), die zum Laden des Batteriesatzes (21, 22) ausgelegt ist;
ein Hauptentladeschaltkreis (30), der so ausgelegt ist, dass er den Batteriesatz (21, 22) an das Lastgerät (3) entlädt;
ein regulierender Entladeschaltkreis (40), der ein Widerstandselement enthält; und
eine Steuereinheit (50), die so ausgelegt ist, dass sie den Ladeschaltkreis, den Hauptentladeschaltkreis und den regulierenden Entladeschaltkreis (40) steuert, wobei
zu einem ersten Zeitpunkt, zu dem der Batteriesatz (21, 22) auf eine entladbare obere Grenzspannung geladen ist, die Steuereinheit (50) den Batteriesatz (21, 22) in einen Entladungssperrzustand versetzt, in dem der Batteriesatz (21, 22) auf volle Kapazität geladen ist und nicht an das Lastgerät (3) entladen werden kann, wobei
wenn der Entladungssperrzustand beendet ist, die Steuereinheit (50) dem Batteriesatz (21, 22) die Entladung an das Lastgerät (3) ermöglicht, wobei
der Entladungssperrzustand zu dem ersten Zeitpunkt als Startzeitpunkt beginnt, wobei
die Steuereinheit (50) das Laden des Batteriesatzes (21, 22) nach dem Startzeitpunkt fortsetzt; die Steuereinheit (50) das Laden des Batteriesatzes (21, 22) beendet, um den Batteriesatz (21, 22) elektrisch mit dem regulierenden Entladeschaltkreis (40) zu verbinden, wenn der Batteriesatz (21, 22) den Ladevollstand erreicht; und wobei
zu einem zweiten Zeitpunkt, zu dem eine elektrische Verbindung zwischen dem Batteriesatz (21, 22) und der regulierende Entladeschaltkreis (40) die Akkuspannung auf oder unter die obere Grenzspannung senkt, die Steuereinheit (50) der Batteriesatz (21, 22) von dem regulierender Entladeschaltkreis (40) trennt, und der Entladungssperrzustand zu diesem zweiten Zeitpunkt beendet ist, wobei
der regulierende Entladeschaltkreis (40) einen Widerstand umfasst und der Batteriesatz (21, 22) zusammen mit dem Widerstand einen geschlossenen Stromkreis bildet, wenn der Batteriesatz (21, 22) elektrisch mit dem regulierenden Entladeschaltkreis (40) verbunden ist.

2. Unterbrechungsfreie Stromversorgungseinrichtung (1) nach Anspruch 1, wobei
der Batteriesatz eine Vielzahl von Batteriepaketen umfasst, darunter ein erstes Batteriepaket (21) und ein zweites Batteriepaket (22), wobei die Vielzahl von Batteriepaketen (21, 22) parallel zueinander geschaltet ist, wobei
der Ladekreis so ausgelegt ist, dass er die Vielzahl von Batteriepaketen (21, 22) einzeln lädt, wobei
der Hauptentladeschaltkreis so ausgelegt ist, dass er die mehreren Batteriepakete (21, 22) einzeln entlädt, wobei
zu einem dritten Zeitpunkt, zu dem das erste Batteriepaket (21) auf die entladbare Obergrenzspannung aufgeladen ist und eine Akkuspannung eines zweiten Batteriepakets (22) gleich oder kleiner als die Obergrenzspannung ist, die Steuereinheit (50) das erste Batteriepaket (21) ab dem dritten Zeitpunkt in den Entladungssperrzustand versetzt, und wobei
die Steuereinheit (50) es dem zweiten Batteriepaket (22) ermöglicht, sich an das Lastgerät (3) zu entladen, ohne das zweite Batteriepaket (22) in einem Zeitraum aufzuladen, in dem sich das erste Batteriepaket (21) im Entladungssperrzustand befindet.

3. Unterbrechungsfreie Stromversorgungseinrichtung (1) nach Anspruch 2, wobei:
die Steuereinheit (50) mit dem Laden des zweiten Batteriepakets (22) beginnt, ohne das erste Batteriepaket (21) zu laden, nachdem der Entladungssperrzustand des ersten Batteriepakets (21) beendet ist, wobei
zu einem vierten Zeitpunkt, zu dem der zweite Akku (22) auf die obere Entladungsgrenzspannung aufgeladen ist, die Steuereinheit (50) den zweiten Akku (22) ab dem vierten Zeitpunkt in einen weiteren Entladungssperrzustand versetzt, und wobei
nach Beendigung des Entladungssperrzustands des zweiten Batteriepakets (22) die Steuereinheit (50) es dem ersten Batteriepaket (21) und dem zweiten Batteriepaket (22) ermöglicht, sich an das Lastgerät (3) zu entladen, ohne das erste und das zweite Batteriepaket (21, 22) aufzuladen.

4. Unterbrechungsfreie Stromversorgungseinrichtung (1) nach Anspruch 2 oder 3, wobei die Steuereinheit (50) mit dem Laden eines der mehreren Batteriepakete (21, 22) beginnt, wenn eine Batteriespannung des einen der mehreren Batteriepakete (21, 22) gleich oder kleiner als eine Ladestartsspannung ist, wobei die Ladestartsspannung kleiner als die obere Entladegrenzspannung ist.

5. Unterbrechungsfreie Stromversorgungseinrichtung (1) nach Anspruch 1, wobei die Sekundärbatteriezelle eine Nickel-Wasserstoff-Batterie ist.

## Revendications

1. Dispositif d'alimentation électrique sans interruption (1) destiné à être utilisé avec un dispositif de charge (3) auquel une énergie électrique est fournie par une source d'alimentation externe (2), comprenant :
un bloc-batterie (21, 22) comprenant une cellule de batterie secondaire ;
un circuit de charge (30) configuré pour charger le bloc-batterie (21, 22) ;
un circuit principal de décharge (30) configuré pour décharger le bloc-batterie (21, 22) vers le dispositif de charge (3) ;
un circuit de décharge de régulation (40) comprenant un composant résistif ; et
une unité de commande (50) configurée pour commander le circuit de charge, le circuit principal de décharge et le circuit de décharge de régulation (40),
dans lequel l'unité de commande (50), à un premier instant auquel le bloc-batterie (21, 22) est chargé jusqu'à une tension limite supérieure permettant la décharge, fait passer le bloc-batterie (21, 22) dans un état d'interdiction de décharge, dans lequel le bloc-batterie (21, 22) est chargé à sa pleine capacité et ne peut pas être déchargé vers le dispositif de charge (3),
dans lequel, lorsque l'état d'interdiction de décharge prend fin, l'unité de commande (50) autorise la décharge du bloc-batterie (21, 22) vers le dispositif de charge (3),
dans lequel l'état d'interdiction de décharge commence audit premier instant en tant qu'instant de début,
dans lequel l'unité de commande (50) poursuit la charge du bloc-batterie (21, 22) après l'instant de début et cesse de charger le bloc-batterie (21, 22) afin de raccorder électriquement le bloc-batterie (21, 22) au circuit de décharge de régulation (40) lorsque le bloc-batterie (21, 22) est entièrement chargé,
et dans lequel l'unité de commande (50), à un deuxième instant auquel une connexion électrique entre le bloc-batterie (21, 22) et le circuit de décharge de régulation (40) fait chuter la tension de la batterie jusqu'à la tension limite supérieure ou au-dessous de celle-ci, déconnecte le bloc-batterie (21, 22) du circuit de décharge de régulation (40), et l'état d'interdiction de décharge prend fin audit deuxième instant,
dans lequel le circuit de décharge de régulation (40) comprend une résistance et le bloc-batterie (21, 22) forme, avec la résistance, un circuit fermé lorsque le bloc-batterie (21, 22) est raccordé électriquement au circuit de décharge de régulation (40).

2. Le dispositif d'alimentation électrique sans interruption (1) selon la revendication 1,
dans lequel le bloc-batterie comprend une pluralité de blocs-batteries comprenant un premier bloc-batterie (21) et un deuxième bloc-batterie (22), la pluralité de blocs-batteries (21, 22) étant connectée en parallèle,
dans lequel le circuit de charge est configuré pour charger individuellement la pluralité de blocs-batteries (21, 22),
dans lequel le circuit principal de décharge est configuré pour décharger individuellement la pluralité de blocs-batteries (21, 22),
dans lequel l'unité de commande (50), à un troisième instant auquel le premier bloc-batterie (21) est chargé jusqu'à la tension limite supérieure permettant la décharge et la tension de batterie du deuxième bloc-batterie (22) est égale ou inférieure à la tension limite supérieure, fait passer le premier bloc-batterie (21) dans l'état d'interdiction de décharge à partir dudit troisième instant,
et dans lequel l'unité de commande (50), pendant une période durant laquelle le premier bloc-batterie (21) se trouve dans l'état d'interdiction de décharge, autorise la décharge du deuxième bloc-batterie (22) vers le dispositif de charge (3) sans charger le deuxième bloc-batterie (22).

3. Le dispositif d'alimentation électrique sans interruption (1) selon la revendication 2,
dans lequel l'unité de commande (50), après la fin de l'état d'interdiction de décharge du premier bloc-batterie (21), commence à charger le deuxième bloc-batterie (22) sans charger le premier bloc-batterie (21),
dans lequel l'unité de commande (50), à un quatrième instant auquel le deuxième bloc-batterie (22) est chargé jusqu'à la tension limite supérieure permettant la décharge, fait passer le deuxième bloc-batterie (22) dans un nouvel état d'interdiction de décharge à partir dudit quatrième instant,
et dans lequel l'unité de commande (50), après la fin de l'état d'interdiction de décharge du deuxième bloc-batterie (22), autorise la décharge du premier bloc-batterie (21) et du deuxième bloc-batterie (22) vers le dispositif de charge (3) sans charger ni le premier bloc-batterie (21) ni le deuxième bloc-batterie (22).

4. Le dispositif d'alimentation électrique sans interruption (1) selon la revendication 2 ou 3,
dans lequel l'unité de commande (50) commence à charger l'un des blocs-batteries de la pluralité de blocs-batteries (21, 22) lorsqu'une tension de batterie de l'un des blocs-batteries de la pluralité de blocs-batteries (21, 22) est égale ou inférieure à une tension de début de charge, la tension de début de charge étant inférieure à la tension limite supérieure permettant la décharge.

5. Le dispositif d'alimentation électrique sans interruption (1) selon la revendication 1, dans lequel la cellule de batterie secondaire est une batterie nickelhydrogène.
